# EUROPEAN PATENT SPECIFICATION

(11) **EP 3 232 561 B1**
(45) Date of publication and mention of the grant of the patent: **23.06.2021**
(21) Application number: 14907873.5
(22) Date of filing: 08.12.2014
(51) Int. Cl.: H02P 27/06, H02P 23/00

(54) **POWER CONVERSION DEVICE AND METHOD FOR CONTROLLING POWER CONVERSION DEVICE**
STROMUMWANDLUNGSVORRICHTUNG UND VERFAHREN ZUR STEUERUNG DER STROMUMWANDLUNGSVORRICHTUNG
DISPOSITIF DE TRANSFORMATION D'ÉNERGIE ET SON PROCÉDÉ DE COMMANDE

(43) Date of publication of application: 18.10.2017
(73) Proprietor: Hitachi Industrial Equipment Systems Co., Ltd., Tokyo 101-0022 (JP)
(72) Inventor: ONUMA Yusaku, Tokyo 101-0022 (JP)
(74) Representative: Strehl Schübel-Hopf & Partner
(86) International application number: PCT/JP2014/082364
(87) International publication number: WO 2016/092603

(56) References cited:
- EP-A1- 2 413 488
- WO-A1-2014/141398
- JP-A- 2014 082 901
- US-A- 5 610 806
- US-A- 5 706 186
- US-A1- 2012 206 075
- None

## Description

### TECHNICAL FIELD

The present invention relates to a power conversion device and a method for controlling the power conversion device.

### BACKGROUND ART

A power conversion device for controlling and driving a three-phase AC motor controls a switching circuit to turn ON/OFF on the basis of a desired three-phase AC voltage command to convert AC or DC voltage into a desired three-phase AC voltage and output the three-phase AC voltage.

In general, for generation of a switching circuit control signal, a method of comparing phase voltage commands and a triangular wave is adopted. However, when the phase voltage commands exceed the amplitude of the triangular wave, the control signal cannot be appropriately generated. Therefore, there is a method for inserting a zero-phase voltage into a three-phase AC voltage command and reducing the amplitudes of the phase voltage command to improve a utilization factor of voltage.

The zero-phase voltage may in some cases be inserted for a reduction of a loss in the switching circuit.

A control scheme for ceasing switching of any one phase among the three phases of the switching circuit is called two-phase modulation (two-phase switching) and a control scheme for switching in the three phases is called three-phase modulation (three-phase switching).

In the insertion of the zero-phase voltage represented by these schemes, it is likely that a phase voltage becomes non-continuous and an electric current flowing to the three-phase AC motor pulsates depending on presence or absence of the zero-phase voltage insertion or whenever the zero-phase voltage to be inserted is switched or that excessively large current skipping occurs and the power conversion device and the three-phase AC motor are burnt.

In order to suppress the current pulsation and the current skipping, a technique is disclosed in JP-A-2012-70497 (Patent Literature 1).

This publication describes "an inverter device comprising a converting unit that converts input AC voltage into DC voltage; and a plurality of switching elements for converting the DC voltage into AC voltage having a desired frequency according to PWM control by two-phase switching and three-phase switching, wherein, during switching of the two-phase switching and the three-phase switching, a transition period in which the two-phase switching and the three-phase switching are mixed is provided, and, in the transition period, a voltage command generated in a transient processing section between the three-phase switching and the two-phase switching is output."

A power conversion device with the features in the pre-characterizing portion of the independent claims is disclosed in US 2012/206075 A1. Further power conversion devices employing modulation techniques related to the one of the present invention are disclosed in EP 2 413 488 A1 and US 5 610 806 A.

### CITATION LIST

### PATENT LITERATURE

PATENT LITERATURE 1: JP-A-2012-70497

### SUMMARY OF INVENTION

### TECHNICAL PROBLEM

In the technique disclosed in Patent Literature 1, since a phase voltage becomes momentarily non-continuous in the transient period in which the two-phase switching and the three-phase switching are mixed, in an electric motor having a small electrical time constant, for example, the current pulsation and the current skipping may occur.

Therefore, an object of the present invention is to provide a power conversion device in which the current pulsation and the current skipping do not occur even in the electric motor having a small electrical time constant.

### SOLUTION TO PROBLEM

### The present invention is defined in the independent claims. Further advantageous features are set out in the dependent claims.

This application includes a plurality of means for solving the problem. An example of the means is a power conversion device for controlling an electric motor by converting AC voltage or DC voltage into a desired voltage by operating the switching circuit. The power conversion device includes a control circuit for changing, depending on frequency, voltage, or time, a first modulation zero-phase voltage to be inserted into a voltage command for each phase.

### ADVANTAGEOUS EFFECTS OF INVENTION

According to the present invention, it is possible to provide a power conversion device in which a phase voltage does not become non-continuous even when a zero-phase voltage is switched and that is capable of suppressing pulsation and skipping of an electric current flowing to an electric motor and a method for controlling the power conversion device.

Problems, configurations, and effects other than those explained above are clarified by the following explanation of embodiments.

### BRIEF DESCRIPTION OF DRAWINGS

[FIG. 1] FIG. 1 is an example of an embodiment configuration in a first embodiment.
[FIG. 2] FIG. 2 is an example of voltage command frequencies, zero-phase voltages, and voltage commands in the first embodiment.
[FIG. 3] FIG. 3 is an example of an embodiment configuration in a second embodiment.
[FIG. 4] FIG. 4 is an example of voltage command frequencies, zero-phase voltages, and voltage commands in the second embodiment.
[FIG. 5] FIG. 5 is an example of an embodiment configuration in a third embodiment.
[FIG. 6] FIG. 6 is an example of voltage command frequencies, zero-phase voltages, and voltage commands in the third embodiment.

### DESCRIPTION OF EMBODIMENTS

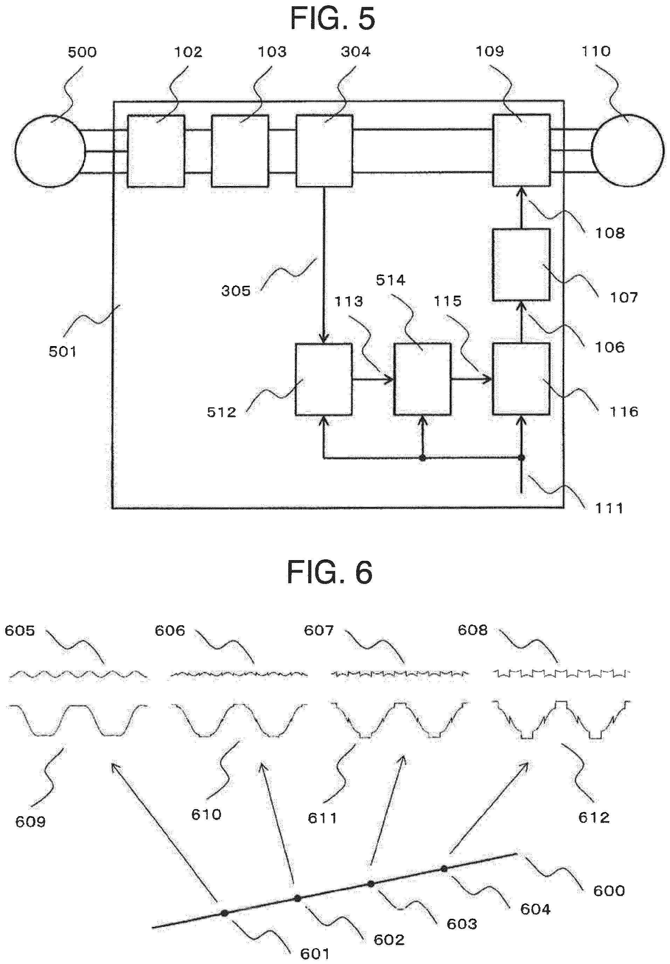

Embodiments of the present invention are explained below with reference to figures 5 and 6. Note that, in the following explanation, components common to the figures are denoted by the same reference numerals and signs and redundant explanation concerning the components is omitted.

### FIRST EMBODIMENT

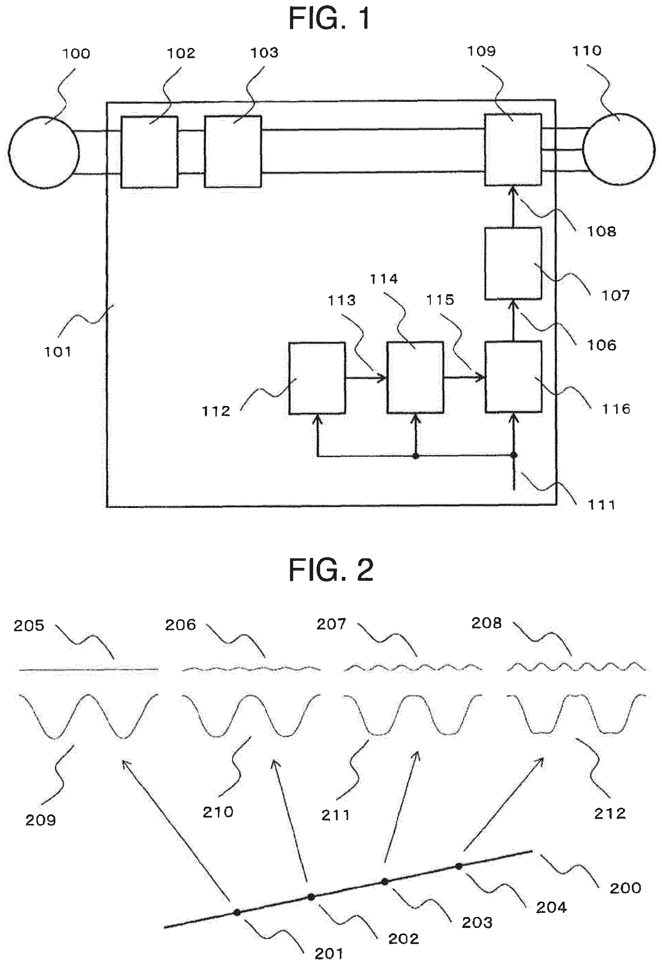

FIG. 1 is an example of an embodiment configuration in a first embodiment.

A power conversion device 101 for controlling and driving a three-phase AC induction motor 110 includes a rectifier circuit 102, a smoothing circuit 103, a switching circuit controller 107, a switching circuit 109, a zero-phase voltage generator 112, a zero-phase voltage adjuster 114, and a zero-phase voltage inserter 116.

Single-phase AC voltage output from a single-phase AC power supply 100 is rectified by the rectifier circuit 102 and smoothed by the smoothing circuit 103 to generate DC voltage.

The switching circuit controller 107 generates a switching circuit control signal 108 such that voltage based on a voltage command 106 after zero-phase voltage insertion is applied to the three-phase AC induction motor 110.

The switching circuit 109 converts the DC voltage into three-phase AC voltage on the basis of the switching circuit control signal 108.

The zero-phase voltage generator 112 generates, on the basis of a voltage command 111 before the zero-phase voltage insertion, a zero-phase voltage 113 for improvement of a utilization factor of voltage output by the switching circuit 109. Examples of the zero-phase voltage to be generated include tertiary integral multiple harmonics of the voltage command 111 before the zero-phase voltage insertion.

The zero-phase voltage adjuster 114 adjusts the zero-phase voltage 113 on the basis of the frequency of the voltage command 111 before the zero-phase voltage insertion. The zero-phase voltage adjuster 114 may adjust the zero-phase voltage 113 on the basis of the frequency of the voltage command 106 after the zero-phase voltage insertion.

The zero-phase voltage inserter 116 inserts a zero-phase voltage 115 after the adjustment into the voltage command 111 before the zero-phase voltage insertion.

Here, it may be considered that when the frequency of the voltage command 111 before the zero-phase voltage insertion is low, a zero-phase voltage is not inserted, that is, the zero-phase voltage is zero, and when the frequency of the voltage command 111 before the zero-phase voltage insertion is high, a zero-phase voltage is inserted for improvement of a utilization factor of voltage output by the switching circuit 109.

FIG. 2 is an example of voltage command frequencies, zero-phase voltages, and voltage commands in the first embodiment.

Frequencies 201, 202, 203, and 204 are respectively any points of a voltage command frequency 200 and increase in the described order.

Zero-phase voltages 205, 206, 207, and 208 are respectively zero-phase voltages at the frequencies 201, 202, 203, and 204.

Voltage commands after zero-phase voltage insertion 209, 210, 211, and 212 are respectively voltage commands after zero-phase voltage insertion at the frequencies 201, 202, 203, and 204.

As shown in FIG. 2, it is possible to continuously change a voltage command by gradually increasing a zero-phase voltage inserted according to the voltage command frequency 200. Therefore, since voltage applied to the three-phase AC induction motor 110 continuously changes, it is possible to suppress pulsation and skipping of an electric current flowing to the three-phase AC induction motor 110.

### SECOND EMBODIMENT

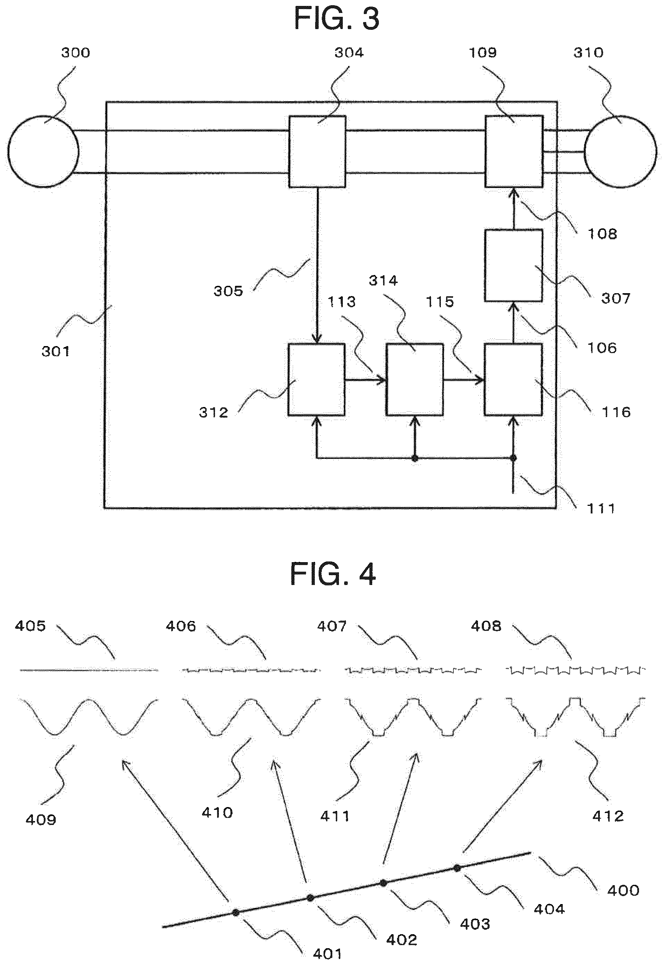

FIG. 3 is an example of an embodiment configuration in the second embodiment.

A power conversion device 301 for controlling and driving a three-phase permanent magnet synchronous motor 310 includes a DC voltage detector 304, a switching circuit controller 307, the switching circuit 109, a zero-phase voltage generator 312, a zero-phase voltage adjuster 314, and the zero-phase voltage inserter 116.

DC voltage output from a DC power supply 300 is input to the switching circuit 109.

The DC voltage detector 304 detects the DC voltage input to the switching circuit 109.

The switching circuit controller 307 generates the switching circuit control signal 108 such that voltage based on the voltage command 106 after zero-phase voltage insertion is applied to a three-phase AC permanent magnet synchronous motor 310.

The zero-phase voltage generator 312 generates, on the basis of the voltage command 111 before the zero-phase voltage insertion and a detected DC voltage 305, a zero-phase voltage for a reduction of the number of times of switching of the switching circuit 109. For example, there are a difference between a maximum phase of the voltage command 111 before the zero-phase voltage insertion and a maximum voltage that the switching circuit 109 is capable of outputting and a difference between a minimum phase of the voltage command 111 before the zero-phase voltage insertion and a minimum voltage that the switching circuit 109 is capable of outputting.

The zero-phase voltage adjuster 314 adjusts the zero-phase voltage 113 on the basis of a norm of the voltage command 111 before the zero-phase voltage insertion. The zero-phase voltage adjuster 314 may adjust the zero-phase voltage 113 on the basis of a norm of the voltage command 106 after the zero-phase voltage insertion.

Here, it may be considered that when the norm of the voltage command 111 before the zero-phase voltage insertion is low, a zero-phase voltage is not inserted, that is, the zero-phase voltage is zero, and when the norm of the voltage command 111 before the zero-phase voltage insertion is high, a zero-phase voltage is inserted for a reduction of the number of times of switching of the switching circuit 109.

FIG. 4 is an example of voltage command norms, zero-phase voltages, and voltage commands in the second embodiment.

Norms 401, 402, 403, and 404 are respectively any points of a voltage command norm 400 and increase in the described order.

Zero-phase voltages 405, 406, 407, and 408 are respectively zero-phase voltages in the norms 401, 402, 403, and 404.

Voltage commands after zero-phase voltage insertion 409, 410, 411, and 412 are respectively voltage commands after zero-phase voltage insertion in the norms 401, 402, 403, and 404.

As shown in FIG. 4, it is possible to continuously change a voltage command by gradually increasing a zero-phase voltage inserted according to the voltage command norm 400. Therefore, since voltage applied to the three-phase AC permanent magnet synchronous motor 310 continuously changes, it is possible to suppress pulsation and skipping of an electric current flowing to the three-phase AC permanent magnet synchronous motor 310.

### Third Embodiment

FIG. 5 is an example of an embodiment configuration in a third embodiment.

A power conversion device 501 for controlling and driving the three-phase AC induction motor 110 includes the rectifier circuit 102, the smoothing circuit 103, the DC voltage detector 304, the switching circuit controller 107, the switching circuit 109, a zero-phase voltage generator 512, a zero-phase voltage adjuster 514, and the zero-phase voltage inserter 116.

Three-phase AC voltage output from a three-phase AC power supply 500 is rectified by the rectifier circuit 102.

The zero-phase voltage generator 512 generates, on the basis of the voltage command 111 before zero-phase voltage insertion and the detected DC voltage 305, the zero-phase voltage 113 for improvement of a utilization factor of voltage output by the switching circuit 109 and a zero-phase voltage for a reduction of the number of times of switching of the switching circuit 109. The zero-phase voltage 113 generated in this way may be two or more zero-phase voltages.

The zero-phase voltage adjuster 514 adjusts the zero-phase voltage 113 on the basis of time after the frequency of the voltage command 111 before the zero-phase voltage insertion reaches a predetermined value. Instead of the frequency of the voltage command 111 before the zero-phase voltage insertion, a norm of the voltage command 111 before the zero-phase voltage insertion may be used. The predetermined value and time required until the zero-phase voltage adjustment is completed may be set in advance on the inside or may be set from the outside or may change depending on a state of the power conversion device such as DC voltage and a voltage command or a state of an electric motor such as an electric current.

Here, it may be considered that when the frequency of the voltage command 111 before the zero-phase voltage insertion is low, a zero-phase voltage is inserted for improvement of a utilization factor of voltage output by the switching circuit 109, and when the frequency of the voltage command 111 before the zero-phase voltage insertion is high, a zero-phase voltage is inserted for a reduction of the number of times of switching of the switching circuit 109.

FIG. 6 is an example of voltage command frequencies, zero-phase voltages, and voltage commands in the third embodiment.

Times 601, 602, 603, and 604 are respectively any points of time 600 after the frequency of the voltage command 111 before the zero-phase voltage insertion reaches a predetermined value and increase in the described order.

The zero-phase voltages 605, 606, 607, and 608 are respectively zero-phase voltages at the times 601, 602, 603, and 604.

Voltage commands after zero-phase voltage insertion 609, 610, 611, and 612 are respectively voltage commands after zero-phase voltage insertion at the times 601, 602, 603, and 604.

As shown in FIG. 6, it is possible to continuously change a voltage command by gradually changing a zero-phase voltage to be inserted according to the time 600 after the frequency of the voltage command 111 before the zero-phase voltage insertion reaches the predetermined value. Therefore, since voltage applied to the three-phase AC induction motor 110 continuously changes, it is possible to suppress pulsation and skipping of an electric current flowing to the three-phase AC induction motor 110.

In the above explanation, the zero-phase voltage is generated on the basis of the DC voltage input to the switching circuit and the voltage command. However, an electric current flowing to the electric motor may be detected or estimated and the zero-phase voltage may be generated on the basis of the detected or estimated electric current. Three or more zero-phase voltages may be generated and continuously changed according to a frequency or a norm.

The present invention is also applicable to a power conversion device for directly converting an alternating current into an alternating current and a multiple power conversion device mounted with a plurality of switching elements for one phase.

In the above explanation, a three-phase AC motor is mainly explained. However, the present invention is also applicable to a multi-phase AC motor.

Note that the present invention is not limited to the embodiments explained above. Various modifications are included in the present invention. For example, the embodiments are explained in detail in order to clearly explain the present invention and are not limited to the embodiments including all the configurations explained above. A part or all of the configurations, the functions, the processing units, the processing means, and the like explained above may be realized as hardware by, for example, being designed as an integrated circuit. The configurations, the functions, and the like may be realized as software by interpreting and executing a program for a processor to realize the respective functions. Information such as programs, tables, and files for realizing the functions can be stored in a storage device such as a memory, a hard disk, or an SSD (Solid State Drive) or a recording medium such as an IC card, an SD card, or a DVD.

### REFERENCE SIGNS LIST

100 single-phase AC power supply
101 power conversion device
102 rectifier circuit
103 smoothing circuit
106 voltage command after zero-phase voltage insertion
107 switching circuit controller
108 switching circuit control signal
109 switching circuit
110 three-phase AC induction motor
111 voltage command before zero-phase voltage insertion
112 zero-phase voltage generator
113 zero-phase voltage
114 zero-phase voltage adjuster
115 zero-phase voltage after adjustment
116 zero-phase voltage inserter
200 voltage command frequency
201,202,203,204 frequency
205, 206, 207, 208 zero-phase voltage
209, 210, 211, 212 voltage command after zero-phase voltage insertion
300 three-phase AC permanent magnet synchronous motor
304 DC voltage detector
305 detected DC voltage
307 switching circuit controller
310 DC power supply
312 zero-phase voltage generator
314 zero-phase voltage adjuster
400 voltage command norm
401,402,403,404 norm
405, 406, 407, 408 zero-phase voltage
409,410,411,412 voltage command after zero-phase voltage insertion
500 three-phase AC power supply
501 power conversion device
512 zero-phase voltage generator
514 zero-phase voltage adjuster
600 time after the frequency of the voltage command 111 before zero-phase voltage insertion reaches a predetermined value
601, 602, 603, 604 time
605, 606, 607, 608 zero-phase voltage
609, 610, 611, 612 voltage command after zero-phase voltage insertion

## Claims

1. A power conversion device for controlling an electric motor by converting AC voltage or DC voltage into a desired voltage by operating a switching circuit (109),
wherein the power conversion device comprises a control circuit (512, 514) for generating and changing, depending on frequency, voltage, or time, a first modulation zero-phase voltage and a second modulation zero-phase voltage to be inserted into a voltage command for each phase,
**characterized in that** the control circuit is adapted to generate the first modulation zero-phase voltage such as to improve a utilization factor of voltage output by the power conversion device for voltage commands of lower frequencies and to generate the second modulation zero-phase voltage such as to reduce the number of switching operations by the switching circuit for voltage commands of higher frequencies,
wherein the control circuit is adapted to continuously reduce the first modulation zero-phase voltage with increasing frequency and to continuously increase the second modulation zero-phase voltage with increasing frequency.

2. The power conversion device according to claim 1, wherein the first modulation and the second modulation are one of three-phase modulation and two-phase modulation.

3. The power conversion device according to claim 1, further comprising a zero-phase voltage adjuster (514), wherein
the zero-phase voltage adjuster is adapted to adjust the zero-phase voltage on the basis of any one of a voltage command frequency before zero-phase voltage insertion or after the zero-phase voltage insertion, time after a voltage command norm or a voltage command frequency reaches a predetermined value, and time after a voltage command norm reaches a predetermined value.

4. A method for controlling a power conversion device for controlling an electric motor by converting AC voltage or DC voltage into a desired voltage by operating a switching circuit, the method comprising
a control step for generating and changing, depending on frequency, voltage, or time, a first modulation zero-phase voltage and a second modulation zero-phase voltage to be inserted into a voltage command for each phase,
**characterized in that** in the control step, the first modulation zero-phase voltage is generated such as to improve a utilization factor of voltage output by the power conversion device for voltage commands of lower frequencies and the second modulation zero-phase voltage is generated such as to reduce the number of switching operations by the switching circuit for voltage commands of higher frequencies,
wherein the first modulation zero-phase voltage is continuously reduced with increasing frequency and the second modulation zero-phase voltage is continuously increased with increasing frequency.

5. The method for controlling the power conversion device according to claim 4, wherein the first modulation and the second modulation are one of three-phase modulation and two-phase modulation.

6. The method for controlling the power conversion device according to claim 4, further comprising a zero-phase voltage adjusting step, wherein
in the zero-phase voltage adjusting step, the zero-phase voltage is adjusted on the basis of any one of a voltage command frequency before zero-phase voltage insertion or after the zero-phase voltage insertion, time after a voltage command norm or a voltage command frequency reaches a predetermined value, and time after a voltage command norm reaches a predetermined value.

## Patentansprüche

1. Stromwandlungsvorrichtung zum Steuern eines Elektromotors durch Umwandeln einer Wechselstromspannung oder einer Gleichstromspannung in eine gewünschte Spannung durch die Operation einer Umschaltschaltung (109),
wobei die Stromwandlungsvorrichtung eine Steuerschaltung (512, 514) zum Erzeugen und Ändern, in Abhängigkeit von Frequenz, Spannung oder Zeit, einer ersten Modulationsnullphasenspannung und einer zweiten Modulationsnullphasenspannung, die in eine Spannungsanweisung für jede Phase einzufügen sind, umfasst,
**gekennzeichnet dadurch, dass** die Steuerschaltung dazu ausgelegt ist, die erste Modulationsnullphasenspannung so zu erzeugen, dass ein Verwendungsfaktor einer Spannungsausgabe durch die Stromumwandlungsvorrichtung für Spannungsanweisungen niedrigerer Frequenzen verbessert wird, und die zweite Modulationsnullphasenspannung so zu erzeugen, dass die Anzahl von Umschaltvorgängen durch die Umschaltschaltung für Spannungsanweisungen höherer Frequenzen verringert wird,
wobei die Steuerschaltung dazu ausgelegt ist, die erste Modulationsnullphasenspannung mit steigender Frequenz kontinuierlich zu verringern und die zweite Modulationsnullphasenspannung mit steigender Frequenz kontinuierlich zu erhöhen.

2. Stromwandlungsvorrichtung nach Anspruch 1, wobei die erste Modulation und die zweite Modulation eine von Dreiphasenmodulation und Zweiphasenmodulation sind.

3. Stromwandlungsvorrichtung nach Anspruch 1, ferner umfassend eine Nullphasenspannung-Justiereinrichtung (514), wobei
die Nullphasen-Justiereinrichtung dazu ausgelegt ist, die Nullphasenspannung auf der Grundlage irgendeines der folgenden zu justieren: einer Spannungsanweisungsfrequenz vor Nullphasenspannungseinfügung oder nach der Nullphasenspannungseinfügung, dem Zeitpunkt, nach dem eine Spannungsanweisungsnorm oder eine Spannungsanweisungsfrequenz einen vorgegebenen Wert erreicht, und dem Zeitpunkt, nach dem eine Spannungsanweisungsnorm einen vorgegebenen Wert erreicht.

4. Verfahren zum Steuern einer Stromwandlungsvorrichtung zum Steuern eines Elektromotors durch Wandeln einer Wechselstromspannung oder einer Gleichstromspannung in eine erwünschte Spannung durch Operation einer Umschaltschaltung, wobei das Verfahren umfasst
einen Steuerschritt zum Erzeugen und Ändern, in Abhängigkeit von Frequenz, Spannung oder Zeit, einer ersten Modulationsnullphasenspannung und einer zweiten Modulationsnullphasenspannung, die in eine Spannungsanweisung für jede Phase einzufügen sind,
**gekennzeichnet dadurch, dass** im Steuerschritt die erste Modulationsnullphasenspannung so erzeugt wird, dass ein Verwendungsfaktor einer Spannungsausgabe durch die Stromwandlungsvorrichtung für Spannungsanweisungen niedrigerer Frequenzen verbessert wird, und die zweite Modulationsnullphasenspannung so erzeugt wird, dass die Anzahl von Schaltvorgängen durch die Umschaltschaltung für Spannungsanweisungen höherer Frequenzen verringert wird,
wobei die erste Modulationsnullphasenspannung mit steigender Frequenz kontinuierlich verringert wird und die zweite Modulationsnullphasenspannung mit steigender Frequenz kontinuierlich erhöht wird.

5. Verfahren zum Steuern der Stromwandlungsvorrichtung nach Anspruch 4, wobei die erste Modulation und die zweite Modulation eine von Dreiphasenmodulation und Zweiphasenmodulation sind.

6. Verfahren zum Steuern der Stromwandlungsvorrichtung nach Anspruch 4, ferner umfassend eine Nullphasenspannung-Justierschritt, wobei
im Nullphasenspannung-Justierschritt die Nullphasenspannung auf der Grundlage irgendeines der folgenden justiert wird: einer Spannungsanweisungsfrequenz vor Nullphasenspannungseinfügung oder nach der Nullphasenspannungseinfügung, dem Zeitpunkt, nach dem eine Spannungsanweisungsnorm oder eine Spannungsanweisungsfrequenz einen vorgegebenen Wert erreicht, und dem Zeitpunkt, nach dem eine Spannungsanweisungsnorm einen vorgegebenen Wert erreicht.

## Revendications

1. Dispositif de conversion d'énergie pour commander un moteur électrique en convertissant une tension de CA ou une tension de CC en une tension désirée en utilisant un circuit de commutation (109),
dans lequel le dispositif de conversion d'énergie comprend un circuit de commande (512, 514) pour générer et changer, en fonction d'une fréquence, d'une tension, ou d'un temps, une tension de phase zéro de première modulation et une tension de phase zéro de deuxième modulation devant être insérées dans une commande de tension pour chaque phase,
**caractérisé en ce que** le circuit de commande est adapté à générer la tension de phase zéro de première modulation de manière à améliorer un facteur d'utilisation de tension délivrée en sortie par le dispositif de conversion d'énergie pour des commandes de tension de fréquences inférieures et à générer la tension de phase zéro de deuxième modulation de manière à réduire le nombre d'opérations de commutation par le circuit de commutation pour des commandes de tension de fréquences supérieures,
dans lequel le circuit de commande est adapté à réduire de manière continue la tension de phase zéro de première modulation avec une fréquence en augmentation et à augmenter de manière continue la tension de phase zéro de deuxième modulation avec une fréquence en augmentation.

2. Dispositif de conversion d'énergie selon la revendication 1, dans lequel la première modulation et la deuxième modulation sont une parmi une modulation triphasée et une modulation biphasée.

3. Dispositif de conversion d'énergie selon la revendication 1, comprenant en outre un dispositif d'ajustement (514) de tension de phase zéro, dans lequel
le dispositif d'ajustement de tension de phase zéro est adapté à ajuster la tension de phase zéro sur la base d'un(e) quelconque parmi une fréquence de commande de tension avant insertion de tension de phase zéro ou après l'insertion de tension de phase zéro, un temps après qu'une norme de commande de tension ou qu'une fréquence de commande de tension a atteint une valeur prédéterminée, et un temps après qu'une norme de commande de tension a atteint une valeur prédéterminée.

4. Procédé de commande d'un dispositif de conversion d'énergie pour commander un moteur électrique en convertissant une tension de CA ou une tension de CC en une tension désirée en utilisant un circuit de commutation, le procédé comprenant
une étape de commande pour générer et changer, en fonction d'une fréquence, d'une tension, ou d'un temps, une tension de phase zéro de première modulation et une tension de phase zéro de deuxième modulation devant être insérées dans une commande de tension pour chaque phase,
**caractérisé en ce qu'**à l'étape de commande, la tension de phase zéro de première modulation est générée de manière à améliorer un facteur d'utilisation de tension délivrée en sortie par le dispositif de conversion d'énergie pour des commandes de tension de fréquences inférieures et la tension de phase zéro de deuxième modulation est générée de manière à réduire le nombre d'opérations de commutation par le circuit de commutation pour des commandes de tension de fréquences supérieures,
dans lequel la tension de phase zéro de première modulation est réduite de manière continue avec une fréquence en augmentation et la tension de phase zéro de deuxième modulation est augmentée de manière continue avec une fréquence en augmentation.

5. Procédé de commande du dispositif de conversion d'énergie selon la revendication 4, dans lequel la première modulation et la deuxième modulation sont une parmi une modulation triphasée et une modulation biphasée.

6. Procédé de commande du dispositif de conversion d'énergie selon la revendication 4, comprenant en outre une étape d'ajustement de tension de phase zéro, dans lequel
à l'étape d'ajustement de tension de phase zéro, la tension de phase zéro est ajustée sur la base d'un(e) quelconque parmi une fréquence de commande de tension avant insertion de tension de phase zéro ou après l'insertion de tension de phase zéro, un temps après qu'une norme de commande de tension ou qu'une fréquence de commande de tension a atteint une valeur prédéterminée, et un temps après qu'une norme de commande de tension a atteint une valeur prédéterminée.
